# EUROPEAN PATENT APPLICATION

(11) **EP 3 531 584 A1**
(43) Date of publication of application: **28.08.2019**
(21) Application number: 18157756.0
(22) Date of filing: 21.02.2018
(51) Int. Cl.: H04B 10/116, G09G 5/00, H04N 19/12, H04N 19/137, H04N 19/174

(54) **METHOD FOR TRANSMITTING DATA IN A VIDEO AND ELECTRONIC DEVICE**

(71) Applicant: Vestel Elektronik Sanayi ve Ticaret A.S., 45030 Manisa (TR)
(72) Inventor: IKIZLER, Anil, 45030 Manisa (TR)
(74) Representative: Ascherl, Andreas

(57) **Abstract**

The present invention provides a method for transmitting data (150) in a video (151) that is displayed on a display device (101), the method comprising detecting (S1) motion in at least two consecutive frames of the video (151), and if local motion above a first predetermined threshold level is detected in delimited areas (103) of the at least two consecutive frames, encoding (S2) the data (150) in the at least two consecutive frames according to a predetermined visible light data encoding scheme outside of the delimited areas (103). Further, the present invention provides a respective electronic device (100).

## Description

### TECHNICAL FIELD

The invention relates to a method for transmitting data in a video. Further, the present invention refers to a respective electronic device.

### BACKGROUND

Although applicable generally to the field of visible light communication, the present invention will mainly be described in conjunction with visible light communication via display devices.

Visible light communication refers to a method for transmitting data in the visible light spectrum. Usually, the visible light is modulated or modified such that the modulation is not perceivable by the human eye.

Usually, visible light as emitted by lamps may be modulated. Another option for performing visible light communication consists in modulating the image or sections of an image that is displayed by a display device, like e.g. a TV set.

However, when modulating the light that is emitted by a display device, the actual content of the image or video has to be taken into account, since different types of image content exhibit different levels of suitability for modulation.

If for example a TV set is used as an emitter for visible light communication signals, usually data is coded into the image by coding or modulating blocks of a predetermined size in the image. The coding or modulating may e.g. comprise adapting the brightness or color of the respective blocks. This coding or modulating will usually be performed such that the user that is watching a TV show on the TV set will not perceive any artefacts of the coding or modulation. Such a method is e.g. shown in "Reading between Lines: High-rate, Non-intrusive Visual Codes within Regular Videos via ImplicitCode" by, S. Shi et al.

However, such coding or modulation may not be applied to videos with high motion rates because the motion causes variations in luminance and/or chrominance in the image. Such variations would overlay the coding or modulation and would therefore render the coding or modulation useless. Therefore, coding or modulating is usually not performed with videos that comprise high motion rates.

Accordingly, there is a need for an improved visible light communication method.

### SUMMARY OF THE INVENTION

The present invention provides a method with the features of claim 1 and an electronic device with the features of claim 7.

Accordingly, it is provided:
A method for transmitting data in a video that is displayed on a display device, the method comprising detecting motion in at least two consecutive frames of the video, if local motion above a first predetermined threshold level is detected in delimited areas of the at least two consecutive frames, encoding the data in the at least two consecutive frames according to a predetermined visible light data encoding scheme outside of the delimited areas.

Further, it is provided:
An electronic device for transmitting data in a video, the electronic device comprising a display device configured to display the video, a motion detector configured to detect motion in at least two consecutive frames of the video, and a data encoder configured to encode the data in a video signal that is provided to the display device according to a predetermined visible light data encoding scheme if local motion above a first predetermined threshold level is detected by the motion detector in delimited areas of the at least two consecutive frames.

The present invention is based on the finding that consecutive images of a video, although comprising movement in certain areas, may still comprise enough space for performing a coding or modulation according to a visible light communication method.

Accordingly, the present invention tries to identify areas of movement in a video and uses other areas for coding or modulating according to the data to be transmitted. It is understood, that the areas of movement may be determined on a frame to frame basis, i.e. comparing two consecutive frames, or for sequences of more than two frames.

The present invention is focused on finding or detecting areas of local motion or movement. Local motion in this context refers to specific areas in the image of the video that move, while other regions like the background do not move. Such situations may e.g. occur in a video when a scene is shown with a fixed background and a number of objects that move before the background. For example a person that moves from one side of the image to the other side of the image may be a source of local motion that is limited to the outer circumference of the person.

By identifying the regions of local motion in the images, the present invention allows identifying the remaining areas of the images that do not comprise any motion. These remaining areas may then be used to encode or modulate the data by use of a visible light data encoding scheme.

The term "local motion above a first predetermined threshold level" refers to the local motion being such that no visible light data encoding scheme may be performed. The first predetermined threshold level may e.g. refer to the size of the area that comprises the local motion or the absolute distance of the motion from one frame to the next, i.e. how far do pixels in the respective area move from one frame to the other. It may therefore be verified if the delimited areas are smaller than a respective threshold or if the distance of movement is less than a respective threshold.

It is understood, that the present invention may be combined with any adequate visible light encoding scheme. It is further understood, that encoding schemes that are especially adapted to include data in images or videos may advantageously be used with the present invention. Since any type of visible light encoding scheme may be used with the present invention, the details of different visible light encoding schemes will not be discussed here. However, visible light data encoding schemes that may especially be used with the present invention comprise visible light data encoding schemes that are based on luminance and/or color hue coding.

An electronic device according to the present invention may e.g. be a TV set, a tablet PC, a smartphone, a public display like e.g. a POS (Point Of Sale) display, a public smart signage display or the like. The other end of the communication link may be formed by any device or number of devices that comprise a camera that is capable of detecting and decoding the nuances in the displayed images that are introduced by the visible light data encoding scheme.

Such an electronic device may therefore e.g. be used in a video console gaming system, where additional data may be transmitted to a mobile phone of a user or a spectator. Further, such an electronic device may e.g. be used in public places to provide additional information to users, e.g. about monuments or products. The information may e.g. comprise text or audiovisual data, in addition the information may comprise links to websites or the like that may then be opened on the receiving device for viewing by the user.

In the electronic device the display device may be the main display of the electronic device that displays the video to the users. The motion detector may be a dedicated motion detector that may be added to the electronic device for the purpose of performing the visible light data encoding scheme. As an alternative, the motion detector may be provided in the electronic device as part of the signal processing chain that is required in the electronic device for decoding and displaying the video. In this case, no additional motion detector has to be added to the electronic device.

The data encoder, as already mentioned above, may be configured to perform any type of visible light data encoding scheme that may be applied to images or videos. The data encoder only has to be adapted to work with the information from the motion detector. This means, that the data encoder may be provided with an interface to the motion detector that allows the data encoder to work with the information from the motion detector.

The data encoder may e.g. receive from the motion detector the information about the delimited areas in the at least two consecutive frames. The data encoder will then skip these delimited areas when encoding the data into the frames.

Alternatively, the data encoder may e.g. receive the motion vectors for the at least two frames from the motion detector and may determine the delimited areas by itself based on the motion vectors.

As already indicated above, the data encoder will only encode the data into the at least two frames if the detected motion is smaller than the first predetermined threshold level. This threshold level may refer to the size of the delimited areas, the speed of movement of objects in the delimited areas or the like.

After encoding the data into the at least two consecutive frames, the data encoder will provide the video data that represents the at least two consecutive frames into a signal processing chain of the electronic device for further processing and displaying on the display device.

It is understood, that the data encoder may e.g. be integrated into any of the components of the data processing signal chain in the electronic device.

With the present invention it is possible to increase the data rate of visible light data encoding schemes, since frames with a high amount of motion are not simply skipped. Instead, with the present invention such frames may be used by excluding from the encoding only the areas of the frames that are not adequately suited for the respective visible light data encoding scheme.

It is understood, that the first predetermined threshold level and any other threshold mentioned in this context may e.g. be experimentally determined. This is especially true, since different visible light data encoding schemes may be used with the present invention and different thresholds may apply for each of them.

Further embodiments of the present invention are subject of the further subclaims and of the following description, referring to the drawings.

In an embodiment, the method may comprise if global motion above a second predetermined threshold level is detected in the at least two consecutive frames, skipping the trailing frames when encoding the data.

The term global motion refers to the motion in the at least two consecutive frames being present in the complete frames or in very large areas of the frames, like e.g. 80% to 95% of the frame area. Such global motion may e.g. be present when the camera performs panning movements

The term trailing frames refers to the frames that follow a frame and comprise motion when compared to the first frame of the inspected group of frames. Comprising motion refers to the trailing frames comprising pixels that in comparison to the first frame are moved or shifted to other positions than in the first frame. Another explanation is that a motion vector exists between the first frame and the following frame.

In another embodiment, the method may comprise if no motion or motion below a predetermined threshold level is detected in the at least two consecutive frames, encoding the data in the at least two consecutive frames according to a predetermined encoding scheme using the complete image area of the at least two consecutive frames.

It is understood, that the present invention need not always limit the encoding area or exclude any delimited area in the frames. Instead, for frames that comprise no motion at all, the complete image area of the respective frame may be used for encoding data, therefore maximizing the data rate.

In a further embodiment, the method may comprise determining the size of the delimited areas and encoding the data only if the size of the delimited areas is smaller than a predetermined size threshold value.

The size threshold value represents a value that determines the minimum amount of usable image area in the single frames that is required to perform data encoding. It may therefore be determined that at least a certain amount of usable areas should be present in the frames such that data is encoded.

The predetermined size threshold value may e.g. be an absolute value e.g. an amount of pixels or a relative value like a percentage of the display size of the electronic device.

In an embodiment, encoding the data outside of the delimited areas may comprise generating an image mask that represents the delimited areas and encoding the data in the areas of the at least two consecutive frames that are not masked by the image mask.

Masking is a very simple yet effective way of excluding the delimited areas from the data encoding. A mask may e.g. be a binary two-dimensional array of the size of the frames that comprises a positive value, e.g. a "1 ", for pixels that may be used for encoding data and a negative value, e.g. "0", for pixels that may not be used for encoding data. It is understood, that an inverted logic may also be used.

The mask may e.g. be generated by the masking unit by comparing or analyzing the coordinates of motion vectors. Motion vectors may e.g. be provided as two points, a start point and an end point, or as an origin point, a direction and a length. In any case, the masking unit may overlay the vectors over the mask, e.g. the two-dimensional binary array, and set the content of the mask accordingly.

In a further embodiment, the motion in the at least two consecutive frames of the video may be detected by a motion detection unit, especially by a motion detector of a video decoder and/or a mpeg decoder and/or a deinterlacer and/or a complex motion adaptive / compensation frame rate converter and/or a motion estimated motion compensation algorithm.

The above mentioned units that may perform the motion detection are usually provided in the signal chain of a video decoder because they are required to correctly decode the video. Therefore, the task of detecting motion or motion vectors in the video need not be performed two times at separate points in the signal processing chain. Instead, the motion detection or motion vector determination that is performed anyways in the signal chain is used also as a basis for the data encoding according to the present invention.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
Fig. 1 shows a flow diagram of an embodiment of a method according to the present invention;
Fig. 2 shows a flow diagram of another embodiment of a method according to the present invention;
Fig. 3 shows a block diagram of an embodiment of an electronic device according to the present invention;
Fig. 4 shows an image without motion;
Fig. 5 shows an image with motion vectors; and
Fig. 6 shows a mask according to the motion vectors of Fig. 5.

In the figures like reference signs denote like elements unless stated otherwise.

### DETAILED DESCRIPTION OF THE DRAWINGS

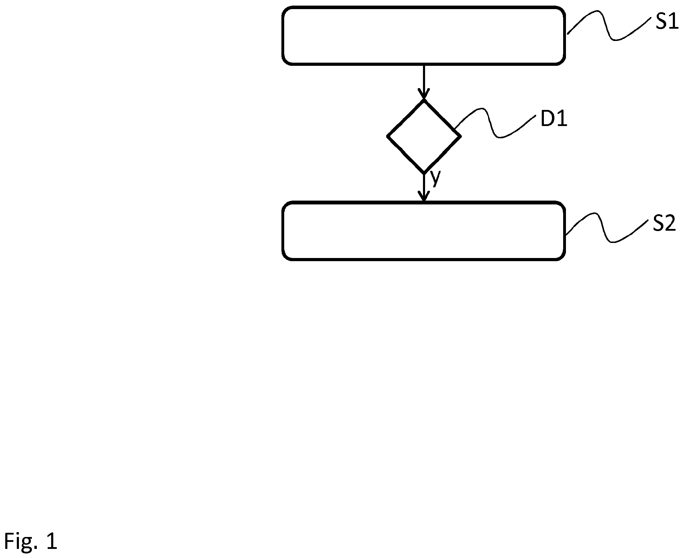

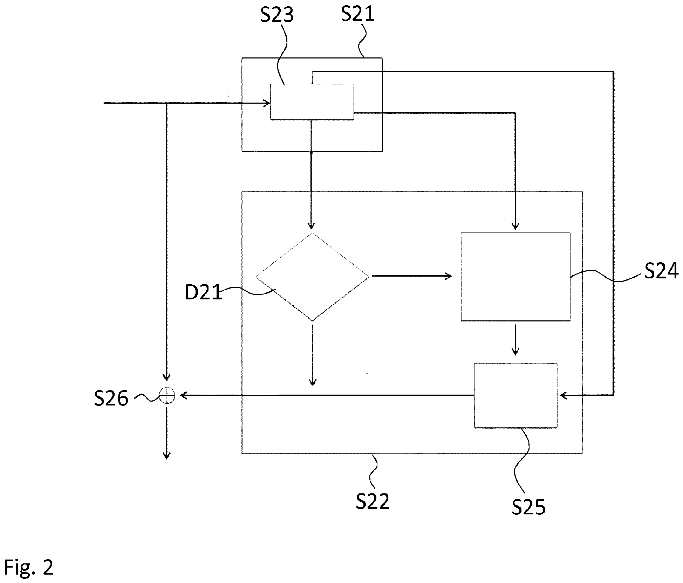

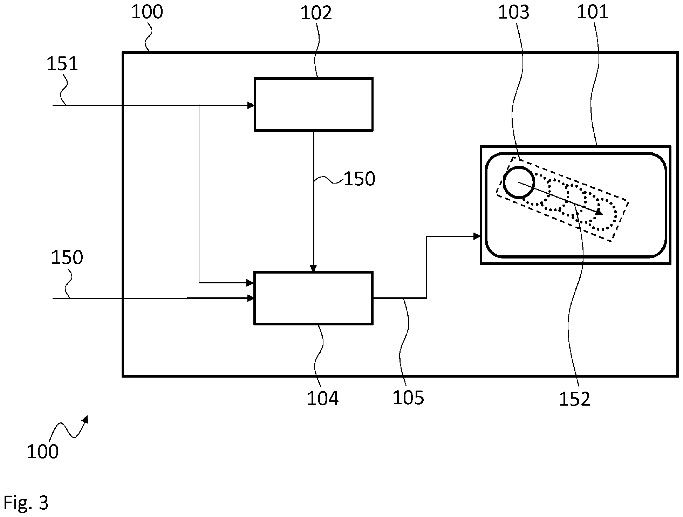

For sake of clarity in the following description of the method based Figs. 1 and 2 the reference signs used in the description of apparatus based Fig. 3 will be maintained.

Fig. 1 shows a flow diagram of an embodiment of a method for transmitting data 150 in a video 151 that is displayed on a display device 101.

The method comprises detecting S1 motion in at least two consecutive frames of the video 151. In decision D1 it is decided if local motion above a first predetermined threshold level is detected in delimited areas 103 of the at least two consecutive frames. If this is the case, the method continues with encoding S2 the data 150 in the at least two consecutive frames according to a predetermined visible light data encoding scheme outside of the delimited areas 103.

Although not shown, it is understood, that if no motion is detected, the data 150 may be encoded in the complete area of the frames. Further, if global motion above a second predetermined threshold level is detected in the at least two consecutive frames, the trailing frames may be skipped when encoding the data 150.

It is understood, that the method according to the present invention may e.g. be performed in the signal processing chain of an electronic device 100 with a display device 101. Such an electronic device 100 may e.g. be a TV set, a video beamer, or any other type of device that is capable of reproducing images of videos.

The motion in the at least two consecutive frames of the video 151 may e.g. be detected by a motion detection unit, like e.g. a motion detector 102 of a video decoder and/or a mpeg decoder and/or a deinterlacer and/or a complex motion adaptive / compensation frame rate converter and/or a motion estimated motion compensation algorithm.

Fig. 2 shows a flow diagram of another embodiment of a method for transmitting data 150 in a video 151 that is displayed on a display device 101.

The method according to Fig. 2 also comprises the step S21 of detecting motion in at least two consecutive frames of the video 151. In Fig. 2 the step S21 comprises a sub-step of analyzing the at least two consecutive frames for motion. This sub-step S23 may e.g. be performed in a motion detection unit, like e.g. a motion detector 102 of a video decoder and/or a mpeg decoder and/or a deinterlacer and/or a complex motion adaptive / compensation frame rate converter and/or a motion estimated motion compensation algorithm.

The information from step S21 is used in step S22 of performing the coding multiple times. In decision D21 it is verified if motion detected in step S21 is limited to areas of the at least two subsequent frames that are smaller than a predetermined size threshold value. If the detected motion is larger than the size threshold, the motion is assumed to be global, i.e. the motion affects all or most of the area of the at least two consecutive frames. However, if the motion is smaller than the predetermined size threshold value, in step S24 the affected or delimited areas are determined, and e.g. masked out for the following step of coding the data 150 into the video 151.

According to the method shown in Fig. 2, the modulation or encoding is performed in step S25 such that the modification is then applied in step S26. The encoding or modulation may e.g. provide a modification map that determines the type and strength of a modification for each single pixel of the frames of the video 151. The modification map may therefore comprise the same number of fields as the frames of the video 151 comprise pixels. As alternative, if for example the modification is always applied to blocks of multiple pixels, the modification map may only comprise the number of fields as there are blocks in the frames of the video 151.

The content of the fields of the modification map may then e.g. refer to the modification. In an exemplary embodiment, the encoding may e.g. be performed by modifying the brightness or the color hue of the pixels or of blocks of pixels of the frames of the video 151. The fields of the modification map may then e.g. comprise a value (positive or negative) that may then be added to the brightness value or one or more of the color values of the respective pixel or block of pixels.

Fig. 3 shows a block diagram of an embodiment of an electronic device 100 for transmitting data 150 in a video 151. The electronic device 100 comprises a motion detector 102 that receives the video 151 and that is coupled to a data encoder 104. The data encoder receives the video 151 and in addition receives the data 150 that is to be transmitted in the video 151. The data encoder 104 is coupled to a display device 101. It is understood, that if the motion detector 102 is part of a signal processing chain of the electronic device 100, the motion detector 102 may also be coupled to other elements of the electronic device 100 (not shown) and the display device 101.

It is understood, that the display device 101 displays the video 151. This may be the plain video 151 or the video with encoded data 150.

The motion detector 102 detects motion in at least two consecutive frames of the video 151, and the data encoder 104 encodes the data 150 in a video signal 105 that is provided to the display device 101 according to a predetermined visible light data encoding scheme, if local motion above a first predetermined threshold level is detected by the motion detector 102 in delimited areas 103 of the at least two consecutive frames.

If no motion or motion below a predetermined threshold level is detected in the at least two consecutive frames, the data encoder 104 may encode the data 150 in the at least two consecutive frames using the complete image area of the at least two consecutive frames.

If global motion above a second predetermined threshold level is detected in the at least two consecutive frames, the data encoder 104 is configured to skip the trailing frames when encoding the data 150. The term global motion refers to the areas affected by the motion being larger than a predetermined size.

The data encoder 104 may e.g. comprises a size verification unit that verifies if the size of the delimited areas 103 is smaller than a predetermined size threshold value, wherein the data encoder 104 encodes the data 150 only if the size of the delimited areas 103 is smaller than the predetermined size threshold value.

In addition, the data encoder 104 may comprise a masking unit configured to generate an image mask that represents the delimited areas 103, wherein the data encoder 104 may encode the data 150 in the areas of the at least two consecutive frames that are not masked by the image mask.

The motion detector 102 may comprise a motion detection unit, especially a motion detector 102 of a video decoder and/or a mpeg decoder and/or a deinterlacer and/or a complex motion adaptive / compensation frame rate converter and/or a motion estimated motion compensation algorithm.

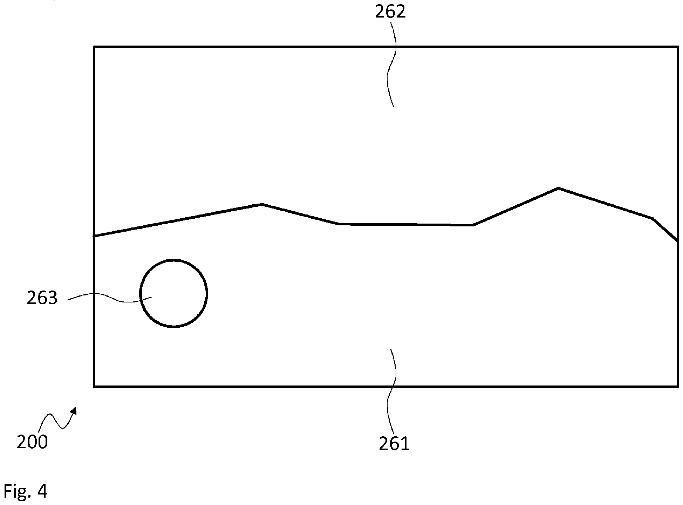

Fig. 4 shows an image 200 without motion. The image 200 may e.g. show a landscape with a lower portion 261, an upper portion 262 and an object 263.

The image was taken without any movement of the object 263 and without any movement of the camera, like e.g. a panning movement. Therefore, the motion detector 102 (see Fig. 3) will not detect any motion and the data encoder 104 may use the complete image surface to encode the data 150 (see Fig. 1).

It is understood, that the chosen scenery is just exemplarily chosen and that any other scenery may also serve for encoding the data 150 as good as the chosen scenery, as long as no movement is present in consecutive images or frames.

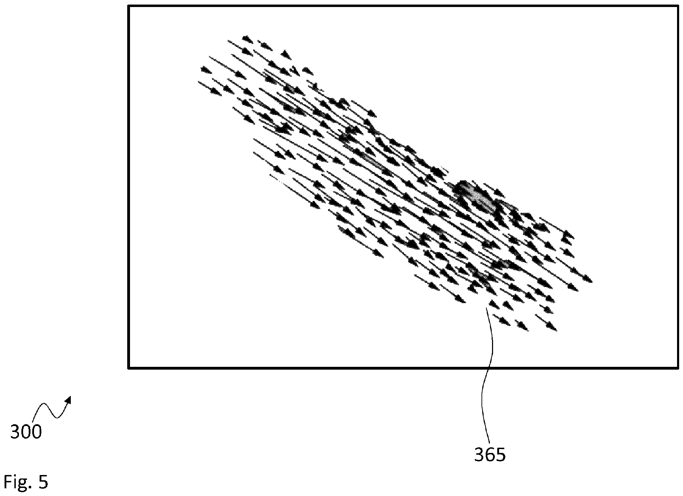

Fig. 5 shows an image 300 with motion vectors 365. The motion vectors 365 may e.g. refer to the movement of the object shown on the display device 101 of the electronic device 100 that is marked with motion vector 152 in Fig. 3.

The motion vectors 365 characterize the emotion of the object by their direction and their length. The motion vectors 365 may refer to the movement of an object between two consecutive frames or in a group of frames.

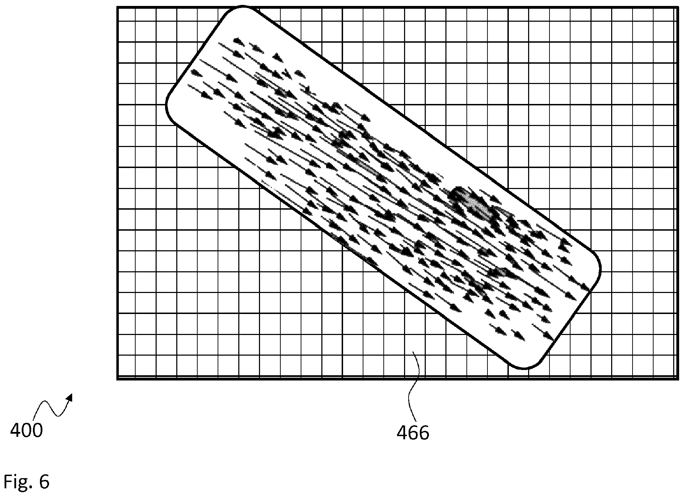

The motion vectors 365 may serve as a basis, e.g. in the masking unit, that may then generate a respective mask, as shown in Fig. 6.

Fig. 6 shows a mask 466 according to the motion vectors of Fig. 5. It can be seen, that the mask defines which region of the image 400 comprises movement, and which region of the image 400 does not comprise any movement, shown as checkered surface.

It can be seen, that the mask 466 cuts out the sections of the image 400 that are affected by the movement of an object as defined by the movement vectors in Fig. 5.

In the further processing according to the present invention, the mask 466 may then be used to determine, which regions of the frames of the video may be used to encode the data 150 and which regions may not be used.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

The present invention provides a method for transmitting data 150 in a video 151 that is displayed on a display device 101, the method comprising detecting S1 motion in at least two consecutive frames of the video 151, and if local motion above a first predetermined threshold level is detected in delimited areas 103 of the at least two consecutive frames, encoding S2 the data 150 in the at least two consecutive frames according to a predetermined visible light data encoding scheme outside of the delimited areas 103. Further, the present invention provides a respective electronic device 100.

### List of reference signs

- 100: electronic device
- 101: display device
- 102: motion detector
- 103: delimited area
- 104: data encoder
- 105: video signal

- 150: data
- 151: video
- 152: motion vector

- 200, 300, 400: image

- 261, 262: section
- 263: object

- 365: motion vectors

- S1, S2, S21, S22, S23, S24, S25, S26: method steps
- D1, D21: decision

## Claims

1. Method for transmitting data (150) in a video (151) that is displayed on a display device (101), the method comprising:
detecting (S1) motion in at least two consecutive frames of the video (151),
if local motion above a first predetermined threshold level is detected in delimited areas (103) of the at least two consecutive frames, encoding (S2) the data (150) in the at least two consecutive frames according to a predetermined visible light data encoding scheme outside of the delimited areas (103).

2. Method according to claim 1, comprising if global motion above a second predetermined threshold level is detected in the at least two consecutive frames, skipping the trailing frames when encoding the data (150).

3. Method according to any one of the preceding claims, comprising if no motion or motion below a predetermined threshold level is detected in the at least two consecutive frames, encoding the data (150) in the at least two consecutive frames according to a predetermined encoding scheme using the complete image area of the at least two consecutive frames.

4. Method according to any one of the preceding claims, comprising determining the size of the delimited areas (103) and encoding the data (150) only if the size of the delimited areas (103) is smaller than a predetermined size threshold value.

5. Method according to any one of the preceding claims, wherein encoding the data (150) outside of the delimited areas (103) comprises generating an image mask that represents the delimited areas (103) and encoding the data (150) in the areas of the at least two consecutive frames that are not masked by the image mask.

6. Method according to any one of the preceding claims, wherein the motion in the at least two consecutive frames of the video (151) is detected by a motion detection unit, especially by a motion detector (102) of a video decoder and/or a mpeg decoder and/or a deinterlacer and/or a complex motion adaptive / compensation frame rate converter and/or a motion estimated motion compensation algorithm.

7. Electronic device (100) for transmitting data (150) in a video (151), the electronic device (100) comprising:
a display device (101) configured to display the video (151),
a motion detector (102) configured to detect motion in at least two consecutive frames of the video (151), and
a data encoder (104) configured to encode the data (150) in a video signal (105) that is provided to the display device (101) according to a predetermined visible light data encoding scheme if local motion above a first predetermined threshold level is detected by the motion detector (102) in delimited areas (103) of the at least two consecutive frames.

8. Electronic device (100) according to claim 7, wherein if global motion above a second predetermined threshold level is detected in the at least two consecutive frames, the data encoder (104) is configured to skip the trailing frames when encoding the data (150).

9. Electronic device (100) according to any one of the preceding claims 7 and 8, wherein if no motion or motion below a predetermined threshold level is detected in the at least two consecutive frames, the data encoder (104) is configured to encode the data (150) in the at least two consecutive frames using the complete image area of the at least two consecutive frames.

10. Electronic device (100) according to any one of the preceding claims 7 to 9, wherein the data encoder (104) comprises a size verification unit that is configured to verify if the size of the delimited areas (103) is smaller than a predetermined size threshold value and wherein the data encoder (104) is configured to encode the data (150) only if the size of the delimited areas (103) is smaller than the predetermined size threshold value.

11. Electronic device (100) according to any one of the preceding claims 7 to 10, wherein the data encoder (104) comprises a masking unit configured to generate an image mask that represents the delimited areas (103), and wherein the data encoder (104) is configured to encode the data (150) in the areas of the at least two consecutive frames that are not masked by the image mask.

12. Electronic device (100) according to any one of the preceding claims 7 to 11, wherein the motion detector (102) comprises a motion detection unit, especially a motion detector (102) of a video decoder and/or a mpeg decoder and/or a deinterlacer and/or a complex motion adaptive / compensation frame rate converter and/or a motion estimated motion compensation algorithm.
